# EUROPÄISCHE PATENTSCHRIFT

(11) **EP 3 457 980 B1**
(45) Veröffentlichungstag und Bekanntmachung des Hinweises auf die Patenterteilung: **13.10.2021**
(21) Anmeldenummer: 17722464.9
(22) Anmeldetag: 10.05.2017
(51) Int. Cl.: A61C 7/00, A61C 7/08

(54) **RETAINER SOWIE VERFAHREN ZU DESSEN HERSTELLUNG**
RETAINER AND METHOD FOR PRODUCTION THEREOF
DISPOSITIF DE RÉTENTION AINSI QUE PROCÉDÉ POUR SA FABRICATION

(30) Priorität: 17.05.2016 DE 102016109007
(43) Veröffentlichungstag der Anmeldung: 27.03.2019
(73) Patentinhaber: CA Digital GmbH, 40724 Hilden (DE)
(72) Erfinder: JO, Yong-min, 40227 Düsseldorf (DE)
(74) Vertreter: Pellengahr, Maximilian Rudolf
(86) Internationale Anmeldenummer: PCT/EP2017/061188
(87) Internationale Veröffentlichungsnummer: WO 2017/198514

(56) Entgegenhaltungen:
- WO-A1-2014/008583
- CN-A- 101 559 006
- US-A- 4 253 828
- US-A1- 2008 044 786
- US-A1- 2016 120 620

## Beschreibung

### Einleitung

Die vorliegende Anmeldung betrifft einen Retainer zur Stabilisierung der Stellung von Zähnen eines menschlichen Gebisses, nach dem Oberbegriff von Anspruch 1.

Weiterhin betrifft die vorliegende Anmeldung ein Verfahren zur Herstellung eines Retainers nach einem der vorhergehenden Ansprüche, nach dem Oberbegriff von Anspruch 7.

Unter einem "Bogen" wird im Sinne der vorliegenden Anmeldung ein lang gestrecktes Element verstanden, welches die beschriebene gekrümmte Form aufweist. Die Form ist dabei so ausgebildet, dass der Bogen an eine Form eines Unterkiefers oder Oberkiefers angepasst ist, sodass der Bogen an die Zähne des Unterkiefers bzw. Oberkiefers des jeweils zu behandelnden Patienten angelegt werden kann. Um eine Kraftübertragung zwischen dem Retainer und den zu behandelnden Zähnen zu ermöglichen, wird der an die Zähne angelegte Bogen mittels eines Verbindungsmittels in Kraft übertragender Weise mit den Zähnen verbunden. Idealerweise ist der Bogen so ausgeformt, dass er individuell an die jeweils zu behandelnden Zähne angepasst ist, sodass ein Abstand zwischen dem Bogen und jeweils zugewandten Zahnoberflächen möglichst minimal ist.

Unter den "Ausformungen", von denen in aller Regel mehrere entlang der Mittelachse des Retainers angeordnet sind, sind insbesondere lokale Peaks zu verstehen, die sich senkrecht zu der Mittelachse des Retainers erstrecken. Die lokalen Ausformungen dienen dazu, den Retainer möglichst genau entlang von Zahnoberflächen der zu behandelnden Zähne zu führen. Dies gilt insbesondere im Bereich von Zahnzwischenräumen. Mittels der Ausformungen erstreckt sich der Retainer in die Zahnzwischenräume hinein anstatt diese gerade zwischen Anliegestellen des Retainers an den Zahnoberflächen zu überbrücken. Hierdurch entsteht idealerweise nach einem Anlegen des Retainers an die zu behandelnden Zähne gewissermaßen ein entlang der Mittelachse des Retainers betrachteter Formschluss, sodass eine Bewegung des Retainers in eine Richtung parallel zu seiner Mittelachse blockiert ist. Mit anderen Worten ist der Retainer vorteilhafterweise "passgenau" ausgeführt, wobei diese Ausführung mittels der beschriebenen Ausformungen ermöglicht ist.

Unter der "Mittelachse" des Retainers wird die Achse verstanden, entlang derer sich der Retainer mit seiner global betrachtet gekrümmten Form erstreckt. Betrachtet man den Retainer jeweils in seinem Querschnitt, so ist Mittelachse gewissermaßen die Summe aller Schwerpunkte des Retainers in seinen einzelnen Querschnitten.

Unter einer "einstückigen" Ausgestaltung des erfindungsgemäßen Retainers wird ein solcher Retainer verstanden, der von einem einzigen Teil gebildet ist. Hierbei ist es grundsätzlich vorstellbar, dass der Retainer im Zuge seiner Herstellung ausgehend von separaten Teilen oder Elementen zusammengesetzt wird, nach Fertigstellung des Retainers bilden diese einzelnen Teile jedoch ein einziges, einteiliges Element, bei dem in aller Regel Fugen oder Materialgrenzen nicht länger feststellbar sind. Beispielsweise ist es denkbar, dass der Retainer von mehreren Elementen gebildet ist, die im Zuge der Herstellung des Retainers stoffschlüssig miteinander verbunden werden.

Bezugnehmend auf das vorstehend beschriebene Verfahren, wird unter einem "Abtastmittel" im Sinne der vorliegenden Anmeldung ein Mittel verstanden, mittels dessen es möglich ist, zumindest einzelne Zähne eines menschlichen Gebisses zu erfassen. Ein derartiges Abtastmittel kann insbesondere von einem Intraoralscanner gebildet sein, der in die Mundhöhle des zu behandelnden Patienten eingeführt wird und dort die einzelnen Zähne mittels optischer Messmittel erfasst. Ebenso ist es grundsätzlich denkbar, dass das Abtastmittel von einer Abformmasse gebildet ist, beispielsweise von einer Gipsmasse.

Unter einem "digitalen Modell" der Zähne wird ein Modell verstanden, dass in Form von Daten vorliegt, mittels derer die Zähne virtuell an einer Datenverarbeitungsanlage grafisch dargestellt werden können.

Der "virtuelle Retainer" beschreibt einen solchen Retainer, der nicht tatsächlich, real, sondern lediglich virtuell an einer Datenverarbeitungsanlage, typischerweise mittels eines grafischen Verfahrens, entworfen wird. Im Gegensatz dazu ist ein "realer Retainer" ein tatsächlich existierender körperlicher Gegenstand, der greifbar ist und insbesondere mit den zu behandelnden Zähnen zusammenwirken kann.

### Stand der Technik

Retainer sowie Verfahren zu deren Herstellung sind im Stand der Technik bereits bekannt. Insbesondere ist bereits ein Retainer bekannt, der unter Verwendung eines sogenannten CAD/CAM-Verfahrens hergestellt wird, wobei der Retainer aus einem Materialteil herausgearbeitet wird. Diese Vorgehensweise ist unter anderem in der europäischen Patentanmeldung EP 2 967 756 A1 beschrieben. Ebenfalls ist ein derartiger Retainer bereits unter der Bezeichnung Memotain® am Markt erhältlich.

Der bekannte Retainer weist bereits eine Vielzahl von erheblichen Vorteilen auf, insbesondere ist er mit besonderer Präzision an die Oberfläche der zu behandelnden Zähne angepasst, sodass ein Abstand zwischen dem Retainer und den jeweils zugewandten Zahnoberflächen über die Länge des Retainers hinweg betrachtet durchgehend sehr gering ist. Hierdurch ergibt sich ein besonderer Tragekomfort des Retainers.

Der bekannte Retainer ist von einem Formgedächtnismaterial gebildet, insbesondere von Nitinol. Im Hinblick auf die besonders vorteilhaften elastischen Eigenschaften sowie die hohe Biokompatibilität ist dieses Material sehr geeignet. Gleichwohl ist die Herstellung des Retainers, die ein Herausarbeiten desselben aus einem massiven Materialteil erfordert, vergleichsweise aufwendig und kostenintensiv. Dies gilt insbesondere im Hinblick darauf, dass das für den Retainer verwendete Material sehr teuer ist und im Zuge der Herstellung des Retainers ein nicht unbeachtlicher Verschnitt des Ausgangsmaterials auftritt, da der Retainer dort erfindungsgemäß aus einem Blech herausgeschnitten wird.

Letztgenannter Verfahrensschritt wirkt sich zudem hinsichtlich der Querschnittsform des so gebildeten Retainers einschränkend aus, da in aller Regel lediglich rechteckige Querschnitte erzeugt werden können.

Die WO 2014/008583 A1 offenbart einen Retainer, mittels dessen Zähne im Anschluss an eine aktive kieferorthopädische Behandlung in ihrer neu gewonnenen Position fixiert werden können. Der Retainer ist mittels eines CAD-CAM-Verfahrens herstellbar, wobei ein Ausfräsen des Retainers aus einem Materialblock und ein 3D-Druckverfahren offenbart werden.

### Aufgabe

Der vorliegenden Erfindung liegt mithin die Aufgabe zugrunde, einen Retainer bereitzustellen, dessen Herstellung gegenüber den bekannten Verfahren günstiger und flexibler möglich ist. Weiterhin ist es Aufgabe der vorliegenden Erfindung, ein entsprechendes Herstellverfahren bereitzustellen.

### Lösung

Die zugrunde liegende Aufgabe wird ausgehend von einem Retainer der eingangs beschriebenen Art erfindungsgemäß mit den Merkmalen des Anspruchs 1 gelöst.

Insbesondere sollte ein solcher Kunststoff verwendet werden, der thermoplastische Eigenschaften aufweist, wobei der Kunststoff vorzugsweise dazu geeignet ist, mittels eines 3D-Druckverfahrens verarbeitet zu werden. Hierzu kommen insbesondere folgende Kunststoffe infrage: Polyetherketone, insbesondere Polyetheretherketone (PEEK), thermoplastische Fluorkunststoffe, insbesondere Polyvinylidenfluorid (PVFD), Polyoxymethylen (POM) und Polymide, insbesondere Polyetherimid (PEI).

Unter einem "3D-Druck" wird im Sinne der vorliegenden Anmeldung das schichtweise Aufbauen dreidimensionaler Werkstück verstanden. Ein derartiges Verfahren läuft in aller Regel computergesteuert und auf Basis digital entworfene Modelle ab. Grundsätzlich ist es vorstellbar, dass verschiedenste Materialien mittels eines 3D-Druckverfahrens verarbeitet werden, insbesondere Kunststoffe, Kunstharze, Keramiken und Metalle. Die wichtigsten Techniken des 3D-Druckens sind das selektive Laserschmelzen, das selektive Lasersintern und die Stereolithographie, wobei insbesondere die beiden letztgenannten auch für Kunststoffe bzw. sogar vorwiegend für Kunststoffe zum Einsatz kommen.

Der erfindungsgemäße Retainer hat viele Vorteile. Zum einen ist das Ausgangsmaterial eines Kunststoffes deutlich günstiger als das im Stand der Technik verwendeten Nitinol. Zum anderen ermöglicht die Verwendung eines solchen Kunststoffes die Anwendung eines 3D-Druckverfahrens zur Herstellung des erfindungsgemäßen Retainers. Im Zuge eines solchen Verfahrens wird der Retainer typischerweise urgeformt, wobei die Menge des verbrauchten Materials in aller Regel zumindest im Wesentlichen auf den Retainer selbst entfällt und kaum, vorzugsweise gar kein, Verschnitt anfällt. Weiterhin ist es ohne Weiteres möglich, einen Kunststoff mit geeigneten mechanischen Eigenschaften auszuwählen, die für den Einsatz als Material für einen Retainer geeignet sind. Dasselbe gilt im Hinblick auf die Biokompatibilität eines solchen Kunststoffes. Ein von Kunststoff gebildeter Retainer ist folglich grundsätzlich ohne Weiteres tatsächlich in der Praxis anwendbar. Weiterhin ist ein erfindungsgemäßer Retainer aufgrund der verwendeten Technik günstiger und in weniger Herstellungsschritten herstellbar als bekannte Retainer gemäß dem Stand der Technik.

Die flächige Ausgestaltung des erfindungsgemäßen Retainers bietet ferner den besonderen Vorteil, dass der Retainer flächig mit den zu behandelnden Zähnen zusammenwirken kann. Im Stand der Technik bekannte Retainer sind - wie vorstehend bereits dargelegt - hingegen typischerweise drahtförmig ausgebildet, wobei sie einen entweder quadratischen oder elliptischen Querschnitt aufweisen. Eine Verbindung derartiger Retainer mit den zu behandelnden Zähnen erfolgt mittels eines Verbindungsmittels, typischerweise mittels eines Klebkunststoffs, dass flächig mit Zahnoberflächen der Zähne zusammenwirkt.

Mittels der flächigen Ausgestaltung kann der Retainer entlang seiner Höhe an die Kontur der jeweils anliegenden Zähne angepasst werden und auf diese Weise einen besonders guten Verbund mit den Zähnen ausbilden. Entsprechend ist die Stabilisierungswirkung eines solchen Retainers gegenüber heute bekannten Retainern gesteigert. Auch kann ein solcher Retainer vergleichsweise dünn ausgestaltet werden, sodass er in der Mundhöhle des Patienten kaum einen störenden Einfluss hat und somit zu einem besonders gesteigerten Tragkomfort des Retainers beiträgt. Weiterhin lässt sich ein solcher Retainer auf besonders hygienische Weise tragen, da er kaum bis gar nicht dazu neigt, sich mit Speiseresten zu verfangen.

Die Ausgestaltung des Retainers aus Kunststoff ist hinsichtlich der flächigen Ausbildung desselben besonders günstig, da sich das Kunststoffmaterial individuell formen lässt, insbesondere mittels eines 3D-Druckverfahrens, wie es nachstehend gesondert beschrieben ist. Vorzugsweise ist die Höhe des Retainers mindestens 5-mal so groß wie dessen Dicke.

Vorteilhafterweise ist ein flächig ausgebildeter Retainer relativ zu seiner Hochachse betrachtet geneigt ausgeführt. Das heißt, dass ein Abstand eines oberen Randes des Retainers von der Hochachse größer ist als ein Abstand eines unteren Randes des Retainers. Diese Form ergibt sich auch aus den nachstehenden Ausführungsbeispielen. Sie ist besonders gut dazu geeignet, mit Zähnen zusammenzuwirken, da die Zahnoberflächen sich in aller Regel ausgehend von einem unteren, in unmittelbarer Umgebung des Zahnfleischs befindlichen Rand hin zu einem oberen, dem Zahnfleisch abgewandten Rand "nach vorne", das heißt in eine Labialrichtung erstrecken. Die konische Aufweitung bzw. geneigte Anordnung des erfindungsgemäßen Retainers im Raum ist dieser Form der Zahnoberflächen angepasst und ermöglicht es dem Retainer dadurch, über seine Höhe hinweg flächig an den Zahnoberflächen anzuliegen.

In einer besonders vorteilhaften Ausgestaltung des erfindungsgemäßen Retainers gehört der verwendete Kunststoff der Stoffgruppe der Polyaryletherketone an. Vorzugsweise ist der Kunststoff ein Polyetheretherketon (PEEK). Dieser Kunststoff ist insoweit von besonderem Vorteil, als er sowohl ideale mechanische Eigenschaften als auch eine besonders hohe Biokompatibilität aufweist und somit für den Einsatz als Retainer grundsätzlich sehr geeignet ist. Als superelastisches Material neigt PEEK im Vergleich zu anderen Kunststoffen kaum dazu, zu zerbrechen. Dies ermöglicht eine besonders detaillierte Ausgestaltung des Retainers mit besonders spitz zulaufenden Bereichen wie nachstehend beschrieben. Weiterhin sind mittlerweile Herstellverfahren bekannt, die es erlauben, einen derartigen Kunststoff mittels eines 3D-Druckverfahrens herzustellen. Folglich ist es denkbar, dass ein von PEEK gebildeter Retainer unmittelbar auf Basis eines CAD-Modells mittels einer entsprechenden Druckvorrichtung ausgedruckt wird. Ein entsprechendes Verfahren ist Gegenstand der vorliegenden Anmeldung und nachstehend genauer erläutert. Die Verwendung eines bestimmten 3D-Druckverfahrens ist hierfür nicht zwingend. Insbesondere ist es vorstellbar, einen von PEEK gebildeter Retainer zum Beispiel mittels eines Lasersinter-Verfahrens oder mittels eines Stereolithographie-Verfahrens herzustellen. Auch sind alternative 3D-Druckverfahren denkbar, wobei womöglich in Zukunft noch weitere Verfahren hervorgebracht werden und sich sodann gleichermaßen eignen.

In einer weiterhin vorteilhaften Ausgestaltung des erfindungsgemäßen Retainers weist mindestens eine lokale Ausformung desselben, vorzugsweise mehrere Ausformungen, einen Krümmungsradius von weniger als 1,0 mm, vorzugsweise weniger als 0,5 mm, weiter vorzugsweise weniger als 0,2 mm, auf. Derartig ausgebildete Ausformungen sind gewissermaßen "spitz" ausgebildet, sodass sie besonders gut in die spitz zulaufenden Zahnzwischenräume zwischen benachbarten Zähnen des zu behandelnden Patienten eingreifen können. Ein derartig ausgebildeter Retainer kann besonders gut an die Zähne angepasst werden, sodass er nur sehr geringfügig sich ausgehend von den Zähnen in die Mundhöhle des zu behandelnden Patienten erstreckt und entsprechend für den Patienten besonders angenehm zu tragen ist. Ferner unterliegt ein solcher gut angepasster Retainer einer vergleichsweise geringen Verschmutzung, da sich wenige bis keine Zwischenräume zwischen dem Retainer und den Zähnen erstrecken, in denen sich beispielsweise Essensreste ansammeln könnten. Insoweit ist ein besonders exakt an den Zähnen anliegender Retainer auch im Hinblick auf die Hygiene besonders von Vorteil.

Weiterhin ist ein solcher Retainer von besonderem Vorteil, der eine dreidimensionale Form aufweist. Der Begriff der "dreidimensionalen Form" ist in diesem Zusammenhang so zu verstehen, dass sich die Mittelachse des Retainers, die im mathematischen Sinne für sich allein betrachtet ein eindimensionales Gebilde ist, nicht vollständig innerhalb einer zweidimensionalen Ebene angeordnet ist. Das heißt, dass mindestens zwei Ebenen existieren, die jeweils zwei Punkte entlang der Mittelachse des Retainers beinhalten, wobei diese beiden Ebenen nicht linear voneinander abhängig sind. Bildlich gesprochen erstreckt sich ein solcher dreidimensionaler Retainer nicht nur entlang eines Bogens, sondern zudem aus der Bogenebene heraus.

Ein derartiger dreidimensionaler Retainer ist besonders gut dazu geeignet, an die individuellen Gegebenheiten bei einem jeweiligen Patienten angepasst zu werden. Insbesondere ist es möglich, den Retainer ausschließlich über seine Länge hinweg möglichst ausschließlich über die Zähne zu führen, wobei der Retainer vorteilhafterweise so ausgeformt ist, dass er den interdentalen Zahnfleischpapillen "ausweicht". Hierzu wird der Bogen des Retainers an den seitlichen Rändern eines jeweiligen Zahns "nach oben" geführt und somit aus der Bogenebene heraus. Die erfindungsgemäße dreidimensionale Ausformung erlaubt gegenüber einer zweidimensionalen Ausformung gemäß dem Stand der Technik folglich, dass sich der Retainer gewissermaßen in eine Hochrichtung der Zähne erstreckt und somit den Zahnfleischpapillen ausweichen kann.

Es versteht sich, dass ohne Weiteres ein Retainer vorstellbar ist, der sowohl flächig als auch "dreidimensional" im Sinne der vorstehenden Beschreibung ausgeführt ist. Das heißt, dass auch ein flächiger Retainer vorstellbar ist, dessen Mittelachse sich zumindest teilweise außerhalb einer Ebene erstreckt.

Weiterhin kann ein solcher Retainer von besonderem Vorteil sein, der mindestens eine flächige Übertragungseinrichtung, vorzugsweise eine Mehrzahl flächiger Übertragungseinrichtungen, umfasst. Eine derartige Übertragungseinrichtung ist dazu geeignet, mit einer Zahnoberfläche eines Zahnes flächig verbunden zu werden. Insoweit dienen derartige Übertragungseinrichtungen der Kraftübertragung zwischen dem Retainer und den zu behandelnden Zähnen. Die mindestens eine Übertragungseinrichtung ist einstückig mit dem übrigen Retainer ausgeformt. Insbesondere ist es vorstellbar, dass die Übertragungsfläche als Teil des Retainers im Zuge eines 3D-Druckverfahrens gemeinsam mit dem übrigen Retainer ausgedruckt wird. Eine solche Ausführung ist insbesondere bei einer stabförmigen Ausgestaltung des Bogens des zugehörigen Retainers vorteilhaft.

Ausgehend von einem Verfahren der eingangs beschriebenen Art wird die zugrunde liegende Aufgabe erfindungsgemäß mit den Merkmalen des Anspruchs 7 gelöst.

Der vorstehend beschriebene Retainer ist unabhängig von seiner detaillierten Ausgestaltung mittels dieses erfindungsgemäßen Verfahrens besonders einfach herstellbar. Das Verfahren ist dabei insoweit besonders von Vorteil, als der zu erzeugenden Retainer unmittelbar aus einem Material urgeformt wird, wobei der Materialeinsatz für diesen Vorgang zumindest im Wesentlichen, vorzugsweise vollständig, der Materialmenge entspricht, aus der der spätere, fertige Retainer besteht. Eine Verschwendung von Material findet somit kaum, vorzugsweise gar nicht, statt.

Auch ist das erfindungsgemäße Verfahren für eine präzise Ausgestaltung eines Retainers besonders von Vorteil, da die Daten des virtuell erstellten Retainers unmittelbar mittels eines 3D-Druckers umgesetzt werden und es somit keinen weiteren Zwischenschritt gibt, der dazu beitragen könnte, dass eine zusätzliche Differenz zwischen dem virtuellen Modell und dem späteren realen Retainer erzeugt wird. Mit anderen Worten ist mittels des erfindungsgemäßen Verfahrens der Retainer besonders präzise herstellbar, sodass er passgenau an den zu behandelnden Zähnen anlegen kann. Das so ausgebildete erfindungsgemäße Verfahren stellt ein CAD/CAM-Verfahren dar.

In einer besonders vorteilhaften Ausgestaltung des erfindungsgemäßen Verfahrens weist der Retainer nach Beendigung des 3D-Drucks unmittelbar seine vollendete Form auf. Das heißt, dass der Retainer keiner weiteren Nachbearbeitung beispielsweise mittels eines mechanischen Werkzeuges oder dergleichen bedarf, um bei einem Patienten eingesetzt zu werden. Hierdurch ist zum einen der Arbeitsaufwand für die Herstellung des Retainers reduziert und zum anderen die Präzision der Fertigung begünstigt, da die Qualität des vollendeten Produkts nicht von individuellen Fähigkeiten einer den Retainer bearbeitenden Person abhängig ist. Dies wirkt sich zudem positiv auf die Gleichmäßigkeit und konstante Qualität zu fertigender Retainer aus.

Für die Herstellung des Retainers mittels eines 3D-Drucks ist es besonders von Vorteil, wenn der Retainer schichtweise gedruckt wird. Dabei fährt eine Materialdüse des 3D-Druckers vorzugsweise fortwährend zyklisch eine Kontur des Retainers parallel der Mittelachse des Retainers ab. Mit anderen Worten bewegt sich die Materialdüse gewissermaßen von einem Ende des Bogens des Retainers zu dem gegenüberliegenden Ende des Retainers und bringt im Zuge dieser Bewegung eine Materialschicht auf. Nach Beendigung der Schicht wird sodann die Materialdüse "nach oben", das heißt in eine Richtung parallel zu der Hochachse des Retainers, bewegt. Dabei wird die Materialdüse um das Maß der Dicke der zuvor aufgebrachten Schicht des Retainers angehoben. Anschließend bewegt sich die Materialdüse wieder entlang der Kontur des Retainers zurück zu dem gegenüberliegenden Ende des Bogens, wobei die aufgebrachte Schicht auf die vorausgehende Schicht aufgelegt wird. Mittels einer zyklischen Bewegung der Materialdüse auf diese Weise entlang der Kontur des Retainers werden folglich nach und nach die einzelnen Schichten des Retainers aufgebracht, bis dieser fertiggestellt ist und seine vollständige Höhe aufweist. Die einzelnen Schichten können beispielsweise eine Dicke von jeweils ca. 0,1 mm aufweisen.

Im Zuge des Druckverfahrens wird der thermoplastische Kunststoff erwärmt, sodass er fließfähig ist, wobei der Kunststoff nach seinem Austreten aus der Materialdüse abkühlt und schließlich wieder erstarrt. Das vorstehend beschriebene schichtweise Druckverfahren sollte daher derart durchgeführt werden, dass eine jeweils nachfolgende Schicht auf die jeweils vorhergehende Schicht aufgebracht wird, während die vorhergehende Schicht noch nicht erstarrt ist, sodass sich nach Möglichkeit zwischen den benachbarten Schichten im Zuge des Druckverfahrens ein Stoffschluss ausbildet. Auf diese Weise ist der Retainer nach seiner Fertigstellung von einem einzigen massiven Bauteil gebildet.

Ein besonderer Vorteil des beschriebenen schichtweisen Druckverfahrens besteht darin, dass der fertiggestellte Retainer keine Stützstrukturen aufweist, die ansonsten vor einer weiteren Verwendung des Retainers aufwendig entfernt werden müssen. Derartige Stützstrukturen sind bei gängigen Druckverfahren üblich, um Teile des jeweiligen Druckexemplars fertigen zu können, die über den Grundriss der ersten mittels des Druckers aufgebrachten Lage vorstehen. Die Stützstrukturen dienen dazu, derartige "Überhänge" in vertikale Richtung zu stützen. Dies ist mittels des erfindungsgemäßen Verfahrens nicht notwendig, da sie jeweils vorausgehenden Schicht die jeweils nachfolgenden Schichten derartig stützen, dass Überhänge auch ohne Stützstrukturen vertikal gehalten sind. Ein mittels des vorteilhaften verfahrensgefertigter Retainer ist folglich unmittelbar und ohne jegliche Nachbearbeitung einsetzbar.

Insbesondere im Zuge der Herstellung eines dreidimensionalen Retainers kann das beschriebene Druckverfahren ferner dann besonders von Vorteil sein, wenn in einem Anfangsstadium des Druckens mindestens zwei Materialbereiche geschaffen werden, die zunächst unverbunden sind, wobei diese Materialbereiche erst im Zuge des weiteren Druckens mittels mindestens einer relativ zu den Materialbereichen höhergelegenen Materialschicht stoffschlüssig miteinander verbunden werden. Mittels dieses Verfahrens kann insbesondere ein Retainer hergestellt werden, der mindestens zwei "tiefe Bereiche" aufweist, die beispielsweise zum Anlegen an verschiedene Zähne gedacht sind. Zu den Zahnzwischenräumen ist der fertige Retainer jedoch wieder hochgezogen, um nicht mit dem Zahnfleisch in Kontakt zu treten. Eine derartige Situation ist exemplarisch in den nachfolgenden Ausführungsbeispielen gezeigt.

Es versteht sich, dass ein derartiger dreidimensionaler Retainer - in einem unteren Schnitt betrachtet - voneinander unabhängige Materialbereiche aufweist. Diese sind somit auch während der Herstellung zumindest in dem Anfangsstadium unverbunden. Erst im Zuge der Erstellung "höherer Schichten" des Retainers werden die bis dahin unverbundenen Bereiche schließlich mittels einer durchgehenden Materialschicht miteinander verbunden. Auf diese Weise lässt sich der erfindungsgemäße Retainer unmittelbar drucken, ohne dass eine Nachbearbeitung des fertig gedruckten Retainers notwendig ist. Insbesondere müssen keine Hilfs- und/oder Stützstrukturen entfernt und eine Oberfläche des Retainers nachbearbeitet werden. Stattdessen weist der fertig gedruckte Retainer unmittelbar seine schlussendliche Form auf.

### Ausführungsbeispiele

Der erfindungsgemäße Retainer sowie das erfindungsgemäße Verfahren werden nachstehend anhand von Ausführungsbeispielen, die in den Figuren dargestellt sind, näher erläutert. Es zeigt:
- Fig. 1:: Ein digitales Modell von erfassten Zähnen eines Oberkiefers in einem Querschnitt mit einem virtuellen Retainer,
- Fig. 2:: Das digitale Modell gemäß Figur 1, jedoch in einer Totalen,
- Fig. 3:: Ein digitales Modell von Zähnen eines Oberkiefers mit einem virtuellen, dreidimensionalen Retainer im Entwurfsstadium,
- Fig. 4:: Ein digitales Modell von Zähnen eines Oberkiefers mit einer vereinfachten Darstellung eines virtuellen, stabförmigen Retainers inklusive zugehöriger Übertragungseinrichtungen und
- Fig. 5:: Eine schematische Darstellung eines dreidimensionalen Retainers, der schichtweise gedruckt wurde.

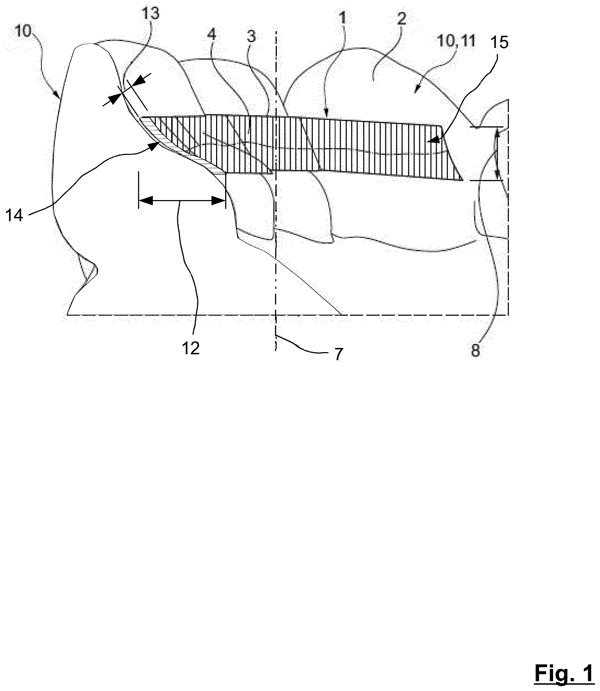

Die Ausführungsbeispiele umfassen mehrere Retainer **1,** die entsprechend den **Figuren 1 bis 4** ausgebildet sind.

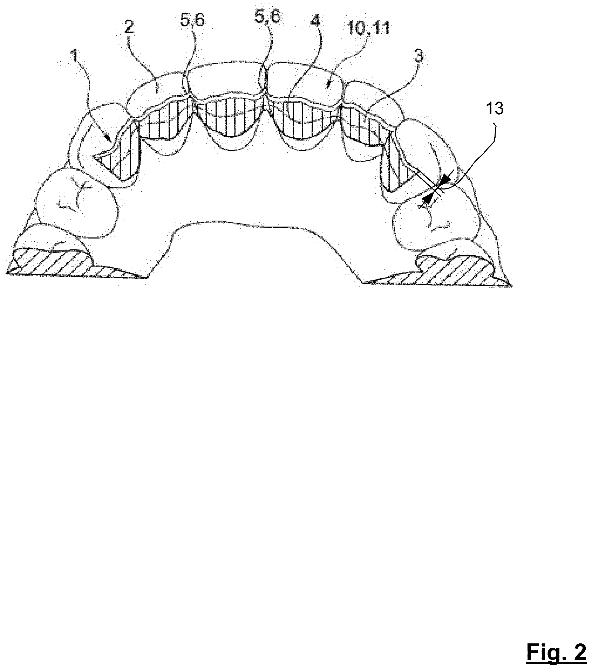

Der Retainer **1** gemäß den **Figuren 1** **und** **2** umfasst einen Bogen **3,** der global betrachtet eine parabolisch gekrümmte Form aufweist. Der Bogen **3** ist dabei so ausgebildet, dass er mit Zähnen **2** eines Oberkiefers eingreifen kann, wobei der Bogen **3** über eine Mittelachse **4** des Retainers **1** hinweg betrachtet in einem besonders geringen Abstand zu Zahnoberflächen **10** der Zähne **2** verläuft. Der Retainer **1** ist flächig ausgeführt und weist eine sich parallel zu einer Hochachse **7** erstreckende Höhe **8** auf, die ungefähr fünfmal größer ist als eine Dicke **13** des Retainers **1.** Weiterhin verfügt der Retainer **1** über lokale Ausformungen **5,** mittels derer sich der Bogen **3** des Retainers **1** in Zahnzwischenräume 6 zwischen benachbarten Zähnen **2** erstreckt. Die Ausformungen **5** weisen in einem Längsschnitt des Bogens **3** betrachtet eine spitze Form auf, wobei ein Krümmungsradius der Ausformungen hier jeweils ungefähr 0,5 mm beträgt.

Wie sich insbesondere aus den **Figuren 1** **und** **2** ergibt, liegt der erfindungsgemäße Retainer **1** flächig an Lingualflächen **11** der zu behandelnden Zähne **2** an. Dies wird dadurch erreicht, dass eine Form des Retainers **1** an die Kontur der jeweiligen Lingualfläche **11** angepasst ist. Im Unterschied zu herkömmlichen Retainern weist der erfindungsgemäße Retainer **1** demzufolge keinen ovalen, kreisförmigen oder rechteckigen Querschnitt auf, sondern einen individuellen Querschnitt, dessen flächige, der Lingualfläche 11 zugewandte Vorderseite **14** sowie dessen gegenüberliegende flächige Rückseite **15** jeweils eine geschwungene, polygonartige Form aufweisen. Eine derartig individuelle Ausgestaltung des Retainers **1** ist mittels der digitalen Erfassung der zu behandelnden Zähne **2** und der sich daran anschließenden Herstellung des Retainers **1** mittels eines Urformprozesses besonders einfach zu erreichen. Hierzu bietet sich insbesondere das erfindungsgemäße Verfahren an, wie bereits ausführlich erläutert wurde. Die flächige Ausgestaltung des Retainers **1** bietet den besonderen Vorteil, dass zwischen den Zähnen **2** und dem Retainer **1** eine vergleichsweise große Kraftübertragungsfläche geschaffen werden kann, der Retainer **1** als solcher jedoch gleichzeitig besonders dünn ausgestaltet werden kann. Mit anderen Worten ist die Dicke **13** des erfindungsgemäßen Retainers **1** besonders gering, wodurch der Retainer **1** im Mund eines Patienten deutlich komfortabler und sicherer zu tragen ist.

Zur Herstellung einer kraftübertragenden Verbindung zwischen dem Retainer **1** und den zugewiesenen Zahnoberflächen **10** ist eine den Zähnen **2** zugewandte Oberfläche des Retainers **1** mit einem Haftmittel versehen, das vor dem Einsetzen des Retainers **1** an die Zähne **2** des zu behandelnden Patienten auf die Oberfläche des Retainers **1** aufgebracht wird.

Der gezeigte Retainer **1** ist mittels eines 3D-Druckverfahrens hergestellt worden und ist von einem Polyetheretherketon (PEEK) gebildet. Wie sich insbesondere aus **Figur 1** ergibt erstreckt sich der Retainer **1** über seine Höhe **8** betrachtet in eine zu seiner Mittelachse **4** sowie seiner Hochachse **7** senkrechte Richtung. Mit anderen Worten ist ein global betrachteter Radius des Retainers **1** in einem oberen Randbereich größer als in einem unteren Randbereich. Diese Form ist der natürlichen Form der Zahnoberflächen **10** der Zähne **2** geschuldet, denen der Retainer **1** nachempfunden ist. Es versteht sich somit, dass der Retainer **1** einen stark ausgeprägten Überhang aufweist, mit dem sich der Retainer **1** gewissermaßen über eine Tiefe **12** erstreckt.

Der gezeigte Retainer **1** wurde mit einem 3D-Druckverfahren hergestellt, bei dem der thermoplastische Kunststoff des Retainers **1** schichtweise aufgebracht wurde. Hierbei ist eine in den Figuren nicht dargestellte Materialdüse eines gleichfalls nicht dargestellten 3D-Druckers zyklisch entlang einer Kontur des Retainers **1** gefahren, wobei die Materialdüse nach dem Aufbringen einer jeweiligen Schicht um ein bestimmtes Maß parallel zu der Hochachse **7** sowie - sofern erforderlich - in Richtung der Tiefe **12** des Retainers **1** bewegt wurde und sodann die nächste Materialschicht aufgebracht hat. Dabei legt sich eine jeweilige Schicht des Kunststoffes auf die jeweils vorausgehende auf. Mittels dieses Vorgehens wurde der Retainer **1** nach und nach über seine gesamte Höhe **8** gedruckt, bis er schließlich seine in den Figuren gezeigte Form aufwies. Bei diesem Vorgehen war es nicht erforderlich, den Retainer **1** im Zuge seiner Herstellung mit Stützstrukturen zu versehen, um den Überhang des Retainers **1** abzufangen. Stattdessen ist der Retainer **1** durch die schichtweise Produktion auch im Bereich von Überhängen von seiner eigenen Struktur gestützt, sodass nach Fertigstellung des Retainers **1** keine Nacharbeit erforderlich ist, um diesen unmittelbar bei einem jeweiligen Patienten einzusetzen.

Wie sich insbesondere aus **Figur 2** ergibt erstreckt sich der erfindungsgemäße Retainer **1** in allen drei Dimensionen, wie sich insbesondere im Bereich der Zahnzwischenräume **6** zeigt. Hier wird der Retainer **1** relativ zu den Zähnen **2** betrachtet gewissermaßen "angehoben", sodass er den Zahnfleischpapillen jeweils zwischen zwei benachbarten Zähnen **2** "ausweicht". Diese dreidimensionale Ausgestaltung des Retainers **1** hat zur Folge, dass in einem untersten Längsschnitt, gewissermaßen in der ersten Schicht bezogen auf das verwendete 3D-Druckverfahren, der Retainer **1** aus einer Mehrzahl, nicht miteinander verbundener, einzelner Bereiche besteht. Erst durch die Entwicklung des Retainers im Zuge des 3D-Druckverfahren in seine Hochrichtung werden diese einzelnen Bereiche miteinander verbunden, sodass sich am Ende der gezeigte Retainer **1** insgesamt ergibt. Hierbei ist im Zuge der Auftragung einer jeweiligen Schicht des Retainers **1** die jeweils vorausgehenden Schicht noch nicht erstarrt, sodass die Schichten untereinander einen Stoffschluss ausbilden, bevor der Kunststoff erstarrt. Dies führt dazu, dass der Retainer **1** nach dessen Fertigstellung zwar im Zuge der Herstellung ursprünglich von einzelnen Schichten gebildet war, jedoch aufgrund des sich ausbildenden Stoffschlusses zwischen den einzelnen Schichten schlussendlich einstückig und ohne Materialgrenzen ausgebildet ist.

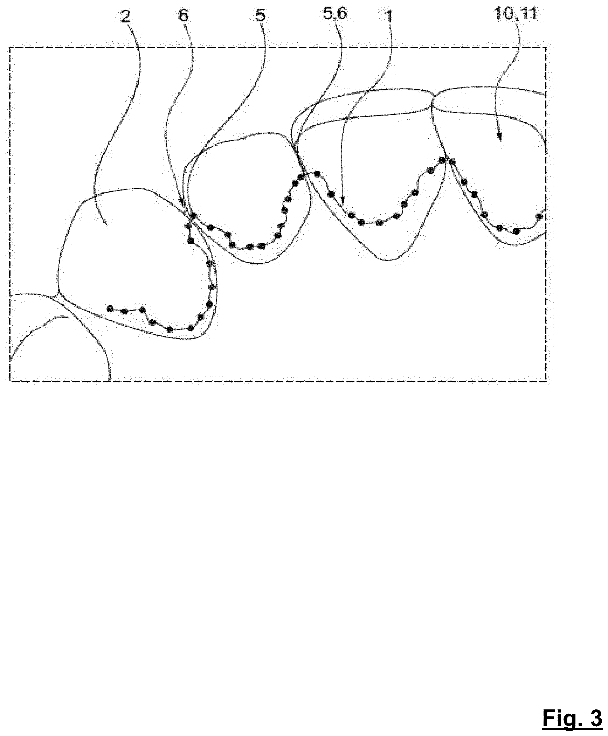

**Figur 3** zeigt den Retainer **1** in einem virtuellen Planungsstadium, wobei hier besonders gut erkennbar ist, wie eine Geometrie des Retainers **1** dreidimensional entlang der zu behandelnden Zähne **2** geplant ist. Insbesondere ist erkennbar, dass die Ausformungen **5** des Retainers **1** im Bereich der Zahnzwischenräume **6** soweit entlang einer seitlichen Flanke der jeweiligen Zähne **2** nach oben gezogen sind, dass die Zahnfleischpapillen nicht von dem Retainer **1** beeinträchtigt sind.

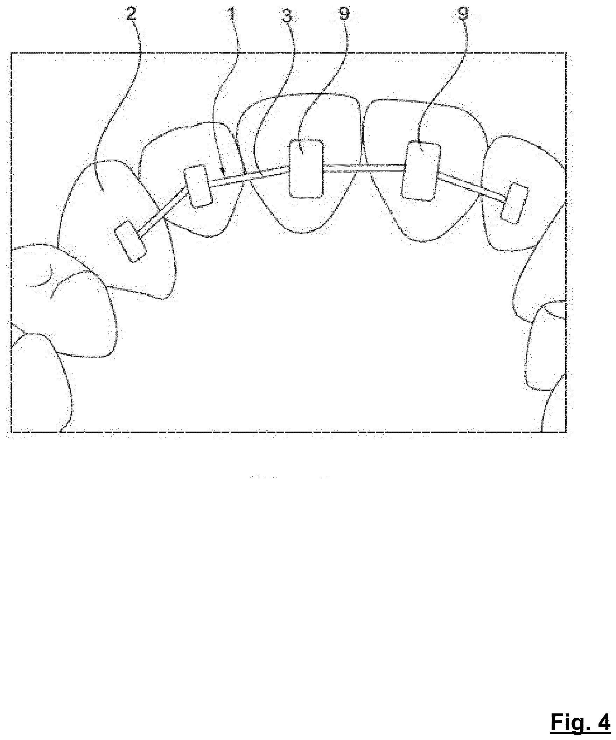

Wie vorstehend bereits beschrieben ist, ist es denkbar, den Retainer **1** gemeinsam mit Übertragungseinrichtungen **9** auszubilden, die vorzugsweise einstückig mit dem Bogen **3** des Retainers **1** verbunden sind. Insbesondere können derartige Übertragungseinrichtungen **9** unmittelbar im Zuge der Herstellung des Retainers **1** mit ausgedruckt werden. Eine idealisierte Darstellung eines entsprechenden Retainers **1** ist **Figur 4** entnehmbar. Die Übertragungseinrichtungen **9** sind besonders gut dazu geeignet, mit den jeweils anliegenden Zähnen **2** bzw. deren Zahnoberflächen **10** in Kraft übertragender Weise verbunden, insbesondere verklebt, zu werden. Derartige Übertragungseinrichtungen **9** sind insbesondere dann von Vorteil, wenn der Retainer **1** im Übrigen stabförmig bzw. drahtförmig ausgebildet ist und somit einer zusätzlichen Haftfläche zur Verbindung mit den zu behandelnden Zähnen **2** bedarf.

Der erfindungsgemäße Retainer **1** kann insbesondere schichtweise gedruckt werden, wobei eine Materialdüse zyklisch den Retainer **1** entlang fährt und bei jedem Zyklus eine zusätzliche Materialschicht **17** aufträgt, bis der Retainer **1** schließlich fertiggestellt ist. Dabei versteht es sich, dass die Materialdüse je Zyklus sich um ein Schichtmaß nach oben bewegt, um die nächsthöhere Materialschicht **17** zu erzeugen.

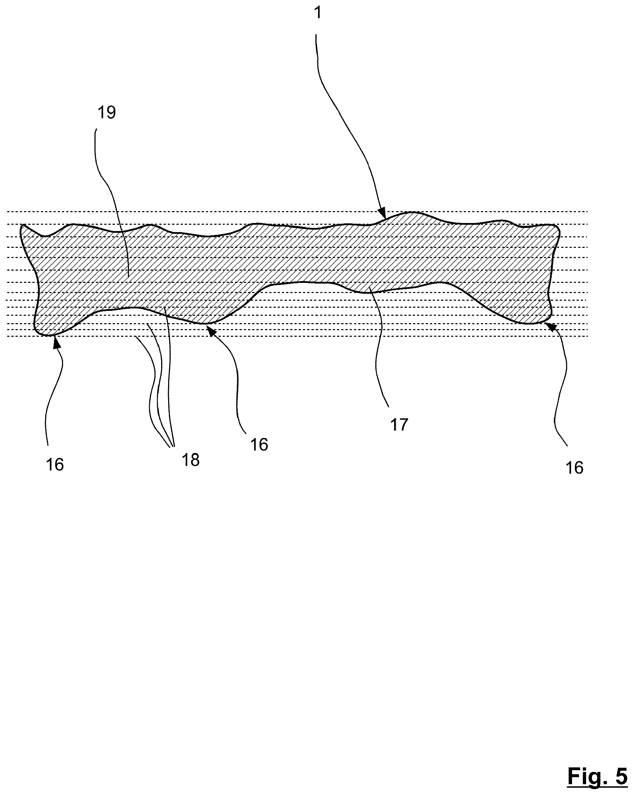

Im Zuge der Herstellung eines dreidimensionalen Retainers **1,** wie er in den **Figuren 2** **und** **5** beispielhaft dargestellt ist, führt die schichtweise Herstellung desselben dazu, dass in einem Anfangsstadium des Druckvorgangs voneinander isolierte Materialbereiche **16** vorliegen, die zunächst unverbunden sind. Dies ergibt sich besonders gut anhand der Darstellung gemäß **Figur 5****,** wobei die dort kenntlich gemachten Materialgrenzen **18** veranschaulichen, in welchen Schichten der Retainer **1** gebildet ist. Je nach Kontur des zu erstellenden Retainers **1** können Schichtdicken der Materialschichten **17** variieren.

Erst bei Erreichen eines bestimmten Höhenniveaus der nicht dargestellten Materialdüse wird im Zuge eines Zyklus zum Auftragen von Material eine durchgehende Materialschicht **19** erstellt, die die bis dahin isolierten Materialbereiche **16** schließlich stoffschlüssig miteinander verbindet. Im fertigen Zustand ist der Retainer **1** somit schließlich einstückig und weist unmittelbar seine schlussendliche Form auf.

## Patentansprüche

1. Retainer (1) in Form eines Lingualretainers, der dazu geeignet ist, mit einer Lingualfläche (11) zu behandelnder Zähne (2) zusammenzuwirken, zur Stabilisierung der Stellung von Zähnen (2) eines menschlichen Gebisses, umfassend
einen Bogen (3), der global betrachtet eine parabolisch gekrümmte Form aufweist, sodass der Retainer (1) an Zähnen (2) eines Oberkiefers oder eines Unterkiefers eines zu behandelnden Patienten angelegt werden kann,
wobei der Retainer (1) lokal betrachtet eine Mehrzahl von entlang seiner Mittelachse (4) angeordneter, sich senkrecht zu der Mittelachse (4) erstreckender Ausformungen (5) aufweist, wobei die Ausformungen (5) jeweils dazu geeignet sind, mit Zahnzwischenräumen (6) zwischen benachbarten Zähnen (2) zusammenzuwirken,
wobei der Retainer (1) einstückig ausgebildet ist,
**dadurch gekennzeichnet, dass**
der Retainer (1) von einem thermoplastischen Kunststoff gebildet ist, der dazu geeignet ist, im Rahmen eines 3D-Druck-Verfahrens verarbeitet zu werden,
wobei der Retainer (1) derart flächig ausgebildet ist, dass eine parallel zu einer Hochachse (7) des Retainers (1) gemessene Höhe (8) des Retainers (1) eine Dicke (13) des Retainers (1) um mindestens das Doppelte übersteigt,
wobei der Retainer (1) relativ zu seiner Hochachse (7) betrachtet derart geneigt ausgebildet ist, dass ein Abstand eines oberen Randes des Retainers von der Hochachse (7) größer ist als ein Abstand eines unteren Randes des Retainers (1).

2. Retainer (1) nach Anspruch 1, **dadurch gekennzeichnet, dass** die Höhe (8) des Retainers (1) mindestens 3-mal, vorzugsweise mindestens 5-mal, so groß ist wie dessen Dicke (13).

3. Retainer (1) nach Anspruch 1 oder 2, **dadurch gekennzeichnet, dass** der Kunststoff, von dem der Retainer (1) gebildet ist, zur Stoffgruppe der Polyaryletherketone gehört, insbesondere der Kunststoff ein Polyetheretherketon ist.

4. Retainer (1) nach einem der Ansprüche 1 bis 3, **dadurch gekennzeichnet, dass** mindestens eine lokale Ausformungen (5) des Retainers (1) einen Krümmungsradius von weniger als 1,0 mm, vorzugsweise weniger als 0,5 mm, weiter vorzugsweise weniger als 0,2 mm, aufweist.

5. Retainer (1) nach einem der Ansprüche 1 bis 4, **dadurch gekennzeichnet, dass** der Retainer (1) eine derart dreidimensionale Form aufweist, dass die Mittelachse (4) des Retainers (1) nicht vollständig in einer Ebene verläuft.

6. Retainer (1) nach einem der Ansprüche 1 bis 5, **gekennzeichnet durch** mindestens eine flächige Übertragungseinrichtung (9), die dazu geeignet ist, mit einer Zahnoberfläche (10) eines Zahnes (2) flächig verbunden, insbesondere verklebt, zu werden.

7. Verfahren zur Herstellung eines Retainers (1) in Form eines Lingualretainers gemäß dem Anspruch 1, der dazu geeignet ist, mit einer Lingualfläche (11) zu behandelnder Zähne (2) zusammenzuwirken, zur Stabilisierung der Stellung von Zähnen (2) eines menschlichen Gebisses, nach einem der vorhergehenden Ansprüche,
- wobei der Retainer einen Bogen (3) umfasst, der global betrachtet eine parabolisch gekrümte Form aufweist, sodass der Retainer (1) an Zähnen(2) eines Oberkiefers oder eines Unterkiefers eines zu behandelnden Patienten angelegt werden kann,
- wobei der Retainer (1) lokal betrachtet eine Mehrzahl von entlang seiner Mittelachse (4) angeordneter, sich senkrecht zu der Mittalachse (4) erstreckender Ausformungen (5) aufweist, wobei die Ausformungen (5) jeweils dazu geeignet sind, mit Zahnzwischenräumen (6) zwischen benachbarten Zähnen (2) zusammenzuwirken,
- wobei der Retainer (1) einstückig ausgebildet ist,
umfassend die folgenden Verfahrensschritte:
a) Zu behandelnde Zähne (2) werden mittels eines Abtastmittels erfasst und anschließend aus hierdurch gesammelten Daten ein digitales Modell der Zähne (2) erstellt.
b) In dem digitalen Modell wird ein virtueller Retainer (1) entworfen, der derart an das digitale Modell der erfassten Zähne (2) angepasst ist, dass ein dem virtuellen Retainer nachempfundener, mit den zu behandelnden Zähnen (2) in Kraft übertragender Weise verbundener, realer Retainer (1) dazu geeignet ist, die zu behandelnden Zähne (2) in ihrer im Moment der Abtastung mittels des Abtastmittels vorliegenden Stellung zumindest im Wesentlichen zu stabilisieren,
**gekennzeichnet durch** den folgenden Verfahrensschritt:
c) Der reale Retainer (1) wird auf Basis von Daten des virtuell entworfenen Retainers mittels eines 3D-Druckers aus einem thermoplastischen Kunststoff derart urgeformt, dass der Retainer (1) nach Abschluss des Urformprozesses unmittelbar seine schlussendliche Form aufweist, sodass der Retainer (1) ohne weitere Bearbeitung an den zu behandelnden Zähnen (2) anbringbar ist, wobei der Retainer (1) derart flächig ausgebildet ist, dass eine parallel zu einer Hochachse (7) des Retainers (1) gemessene Höhe (8) des Retainers (1) eine Dicke (13) des Retainers (1) um mindestens das Doppelte übersteigt, und wobei der Retainer (1) relativ zu seiner Hochachse (7) betrachtet derart geneigt ausgebildet ist, dass ein Abstand eines oberen Randes des Retainers von der Hochachse (7) größer ist als ein Abstand eines unteren Randes des Retainers (1).

8. Verfahren nach Anspruch 7, **dadurch gekennzeichnet, dass** der Retainer (1) aus Kunststoff, vorzugsweise aus einem Kunststoff der Stoffgruppe Polyaryletherketone, weiter vorzugsweise aus einem Polyetheretherketon, geformt wird.

9. Verfahren nach Anspruch 7 oder 8, **dadurch gekennzeichnet, dass** der Retainer (1) nach Abschluss des Urformprozesses unmittelbar seine schlussendliche Form aufweist, sodass der Retainer (1) ohne weitere Bearbeitung an den zu behandelnden Zähnen (2) angebracht wird.

10. Verfahren nach einem der Ansprüche 7 bis 9, **dadurch gekennzeichnet, dass** der Retainer (1) schichtweise gedruckt wird, wobei vorzugsweise eine Materialdüse des 3D-Druckers fortwährend zyklisch eine Kontur des Retainers entlang dessen Mittelachse (4) abfährt, wobei nach einem Bildung einer jeweiligen Materialschicht (17) die Materialdüse parallel zu einer Hochachse (7) des Retainers (1) betrachtet um ein Dickenmaß der gebildeten Materialschicht (17) nach oben bewegt wird, sodass eine unmittelbar nachfolgende Materialschicht (17) in Richtung der Hochachse (7) des Retainers (1) betrachtet oberhalb der vorausgehenden Materialschicht (17) gebildet wird.

11. Verfahren nach Anspruch 9, **dadurch gekennzeichnet, dass** in einem Anfangsstadium des Druckens mindestens zwei Materialbereiche (16) geschaffen werden, die zunächst unverbunden sind, wobei diese Materialbereiche (16) erst im Zuge des weiteren Druckens mittels mindestens einer relativ zu den Materialbereichen (16) höhergelegenen Materialschicht (19) stoffschlüssig miteinander verbunden werden.

## Claims

1. Retainer (1) in the form of a lingual retainer, which is suitable for the purpose of interacting with a lingual surface (11) of teeth (2) that are to be treated, for the stabilisation of the disposition of teeth (2) of a human dentition, comprising an archwire (3), which, as viewed globally, has a parabolically curved shape, such that the retainer (1) can be applied to teeth (2) of an upper jaw or a lower jaw of a patient that is to be treated, wherein
the retainer (1), as viewed locally, has a multiplicity of forms (5), arranged along its central axis (4), and extending at right angles to the central axis (4), wherein
the forms (5) in each case are suitable for the purpose of interacting with interdental spaces (6) between adjacent teeth (2), wherein
the retainer (1) is formed in one piece,
**characterised in that**,
the retainer (1) is formed from a thermoplastic plastic, which is suitable for the purpose of being processed within the context of a 3D-printing method, wherein
the retainer (1) is designed to be planar, such that a height (8) of the retainer (1), measured parallel to a vertical axis (7) of the retainer (1), exceeds a thickness (13) of the retainer (1) by a factor of at least two, wherein
the retainer (1) is inclined relative to its vertical axis (7), such that a distance of an upper edge of the retainer from the vertical axis (7) is greater than a distance of a lower edge of the retainer (1) from the axis.

2. Retainer (1) according to Claim 1,
**characterised in that**,
the height (8) of the retainer (1) is at least 3 times,
preferably at least 5 times, as great as its thickness (13) .

3. Retainer (1) according to Claim 1 or 2,
**characterised in that**,
the plastic from which the retainer (1) is formed belongs to the material group of polyaryletherketones, in particular the plastic is a polyetheretherketone.

4. Retainer (1) according to one of the Claims 1 to 3,
**characterised in that**,
at least one local form (5) of the retainer (1) has a radius of curvature of less than 1.0 mm, preferably less than 0.5 mm, further preferably less than 0.2 mm.

5. Retainer (1) according to one of the Claims 1 to 4,
**characterised in that**,
the retainer (1) has a three-dimensional shape, such that the central axis (4) of the retainer (1) does not run wholly in one plane.

6. Retainer (1) according to one of the Claims 1 to 5,
**characterised by**,
at least one planar transfer device (9), which is suitable for the purpose of being connected in a planar manner, in particular adhesively bonded, to a tooth surface (10) of a tooth (2).

7. Method for the manufacture of a retainer (1) in the form of a lingual retainer according to Claim 1, which is suitable for the purpose of, with a lingual surface (11), interacting with teeth (2) that are to be treated, for the stabilisation of the disposition of teeth (2) of a human dentition, according to one of the preceding claims, wherein
- the retainer comprises an archwire (3), which, as viewed globally, has a parabolically curved shape, such that the retainer (1) can be applied to teeth (2) of an upper jaw or a lower jaw of a patient that is to be treated, wherein
- the retainer (1) has, as viewed locally, a multiplicity of forms (5) arranged along its central axis (4) and extending at right angles to the central axis (4), wherein
the forms (5) in each case are suitable for the purpose of interacting with interdental spaces (6) between adjacent teeth (2), wherein
- the retainer (1) is formed in one piece, comprising the following method steps:
a) teeth (2) that are to be treated are detected by means of a scanning device, and a digital model of the teeth (2) is then created from the data thereby collected.
b) a virtual retainer (1) is designed in the digital model, which is adapted to the digital model of the detected teeth (2), such that a real retainer (1), modelled on the virtual retainer, and connected to the teeth (2) that are to be treated in a force-transmitting manner, is suitable for the purpose of stabilising, at least substantially, the teeth (2) that are to be treated in their disposition existing at the moment of scanning by means of the scanning means,
**characterised by** the following method step:
c) the real retainer (1) is preformed from a thermoplastic plastic by means of a 3D-printer on the basis of data of the virtually designed retainer, such that the retainer (1) has its final shape immediately after completion of the preforming process, such that the retainer (1) can be attached to the teeth (2) that are to be treated without further processing, wherein
the retainer (1) is designed to be planar, such that a height (8) of the retainer (1) measured parallel to a vertical axis (7) of the retainer (1) exceeds a thickness (13) of the retainer (1) by a factor of at least two, and wherein
the retainer (1) is designed to be inclined relative to its vertical axis (7), such that a distance of an upper edge of the retainer from the vertical axis (7) is greater than a distance of a lower edge of the retainer (1) from the axis.

8. Method according to Claim 7,
**characterised in that**,
the retainer (1) is moulded from plastic, preferably from a plastic of the material group of polyaryletherketones, further preferably from a polyetheretherketone.

9. Method according to Claim 7 or 8,
**characterised in that**,
the retainer (1) has its final shape immediately after completion of the preforming process, such that the retainer (1) is attached to the teeth (2) that are to be treated without further processing.

10. Method according to one of the Claims 7 to 9,
**characterised in that**,
the retainer (1) is printed layer-by-layer, wherein a material nozzle of the 3D-printer preferably continuously traverses a contour of the retainer along its central axis (4) in a cyclical manner, wherein after a particular material layer (17) has been formed, the material nozzle is moved upwards by a thickness dimension of the formed material layer (17), as viewed parallel to a vertical axis (7) of the retainer (1), such that an immediately subsequent material layer (17) is formed above the preceding material layer (17), as viewed in the direction of the vertical axis (7) of the retainer (1).

11. Method according to Claim 9,
**characterised in that**,
in an initial stage of the printing, at least two regions of material (16) are created, which are initially unconnected, wherein
these material regions (16) are only materially bonded to each other in the course of the further printing by means of at least one material layer (19) that is laid down at a higher level relative to the material regions (16) .

## Revendications

1. Contention (1), présentant la forme d'une contention linguale, qui est apte à coopérer avec une surface linguale (11) de dents (2) qui doivent être traitées, pour stabiliser la position de dents (2) d'une denture humaine, comprenant
un arc (3), qui considéré dans sa globalité, présente une forme recourbée en parabole, de sorte à permettre de poser la contention (1) contre des dents (2) d'une mâchoire supérieure ou d'une mâchoire inférieure d'un patient qui doit être traité,
considérée localement, la contention (1) comprenant une multiplicité d'empreintes (5) placées le long de son axe médian (4), s'étendant à la perpendiculaire de l'axe médian (4), les empreintes (5) étant aptes à coopérer chacune avec des interstices interdentaires (6) entre des dents (2) voisines,
la contention (1) étant conçue d'un seul tenant,
**caractérisée en ce que**
la contention (1) est conçue en une matière thermoplastique, qui est apte à être mise en œuvre dans le cadre d'un procédé d'impression en 3 D,
la contention (1) étant conçue à surface plane de telle sorte, qu'une hauteur (8) de la contention (1), mesurée à la parallèle d'un axe vertical (7) de la contention (1) excède d'au moins le double une épaisseur (13) de la contention (1),
considérée par rapport à son axe vertical, (7) la contention (1) étant conçue en inclinaison de telle sorte, qu'un écart entre un bord supérieur de la contention et l'axe vertical (7) soit supérieur à un écart d'un bord inférieur de la contention (1).

2. Contention (1) selon la revendication 1, **caractérisée en ce que** la hauteur (8) de la contention (1) correspond au moins au triple, de préférence au moins au quintuple de son épaisseur (13).

3. Contention (1) selon la revendication 1 ou 2, **caractérisée en ce que** la matière plastique dans laquelle est constituée la contention (1) fait partie du groupe de matières des polyaryléthercétones, notamment la matière plastique est un polyaryléthercétone.

4. Contention (1) selon l'une quelconque des revendications 1 à 3, **caractérisée en ce qu'**au moins une empreinte (5) locale de la contention (1) présente un rayon de courbure inférieur à 1,0 mm, de préférence inférieur à 0,5 mm, de manière plus préférentielle, inférieur à 0,2 mm.

5. Contention (1) selon l'une quelconque des revendications 1 à 4, **caractérisée en ce que** la contention (1) présente une forme tridimensionnelle telle, que l'axe médian (4) de la contention (1) ne s'écoule pas totalement dans un plan.

6. Contention (1) selon l'une quelconque des revendications 1 à 5, **caractérisée par** au moins un système de transmission (9) plan qui est apte à être assemblé à plat, notamment collé avec une surface dentaire (10) d'une dent (2).

7. Procédé, destiné à fabriquer une contention (1) présentant la forme d'une contention linguale selon la revendication 1, qui est apte à coopérer avec une surface linguale (11) de dents (2) qui doivent être traitées, pour stabiliser la position de dents (2) d'une denture humaine selon l'une quelconque des revendications précédentes,
- la contention comprenant un arc (3) qui considéré dans sa globalité, présente une forme recourbée en parabole, de sorte à permettre de poser la contention (1) contre des dents (2) d'une mâchoire supérieure ou d'une mâchoire inférieure d'un patient qui doit être traité,
- considérée localement, la contention (1) comprenant une multiplicité d'empreintes (5) placées le long de son axe médian (4), s'étendant à la perpendiculaire de l'axe médian (4), les empreintes (5) étant aptes à coopérer chacune avec des interstices interdentaires (6) entre des dents (2) voisines,
- la contention (1) étant conçue d'un seul tenant, comprenant les étapes de procédé suivantes, consistant à :
a) détecter les dents (2) qui doivent être traitées à l'aide d'un moyen de balayage, suite à quoi, créer un modèle numérique des dents (2) à partir de données collectées à cet effet,
b) concevoir dans le modèle numérique une contention (1) virtuelle qui est adaptée au modèle numérique des dents (2) détectées, de telle sorte qu'une contention (1) réelle, reproduite selon la contention virtuelle, assemblée avec les dents (2) qui doivent être traitées de manière à transmettre la force soit apte à stabiliser au moins essentiellement les dents (2) qui doivent être traitées dans leur position présente au moment du balayage à l'aide du moyen de balayage,
**caractérisé par** l'étape de procédé suivante, consistant à :
c) façonner la contention (1) en une matière thermoplastique sur la base de données de la contention conçue virtuellement, à l'aide d'une imprimante en 3D de telle sorte qu'après l'achèvement du processus de façonnage, la contention (1) présente immédiatement sa forme définitive, de sorte que la contention (1) puisse être appliquée sans usinage supplémentaire sur les dents (2) qui doivent être traitées,
la contention (1) étant conçue à surface plane de telle sorte qu'une hauteur (8) de la contention (1), mesurée à la parallèle d'un axe vertical (7) de la contention (1) excède d'au moins le double une épaisseur (13) de la contention (1), et considérée par rapport à son axe vertical, (7) la contention (1) étant conçue en inclinaison de telle sorte, qu'un écart entre un bord supérieur de la contention et l'axe vertical (7) soit supérieur à un écart d'un bord inférieur de la contention (1).

8. Procédé selon la revendication 7, **caractérisé en ce que** l'on façonne la contention (1) en une matière plastique, de préférence en une matière plastique du groupe de matières des polyaryléthercétones, de manière plus préférentielle en un polyaryléthercétone.

9. Procédé selon la revendication 7 ou 8, **caractérisé en ce que** la contention (1) présente sa forme définitive, immédiatement après l'achèvement du processus de façonnage, de sorte que l'on applique la contention (1) sans usinage supplémentaire sur les dents (2) qui doivent être traitées.

10. Procédé selon l'une quelconque des revendications 7 à 9, **caractérisé en ce que** l'on imprime la contention (1) couche par couche, de préférence une buse à produit de l'imprimante 3 D suivant cycliquement en continu un contour de la contention le long de son axe médian (4), après la création d'une couche de matière (17) respective, considérée à la parallèle d'un axe vertical (7) de la contention (1), l'on déplace vers le haut la buse à produit de la valeur d'une cote d'épaisseur de la couche de matière (17) créée, de sorte que, considérée dans la direction de l'axe vertical (7) de la contention (1), une couche de matière (17) directement suivante soit créée au-dessus de la couche de matière (17) précédente.

11. Procédé selon la revendication 9, **caractérisé en ce que** dans un stade de départ de l'impression, l'on produit au moins deux zones de matière (16) qui dans un premier temps ne sont pas reliées entre elles, lesdites zones de matière (16) n'étant reliées l'une à l'autre par matière qu'au cours de l'impression ultérieure à l'aide d'au moins une couche de matière (19) placée plus haut que les zones de matière (16).
